(19) **Europäisches Patentamt**

**European Patent Office**

**Office européen des brevets**

(11) **EP 4 202 092 A1**

(12) **EUROPEAN PATENT APPLICATION**
published in accordance with Art. 153(4) EPC

(43) Date of publication:
**28.06.2023 Bulletin 2023/26**

(21) Application number: **21858570.1**

(22) Date of filing: **18.08.2021**

(51) International Patent Classification (IPC):
*D01F 1/10* (2006.01)      *D01D 5/08* (2006.01)
*D01F 8/14* (2006.01)      *D01D 5/34* (2006.01)
*D01D 5/253* (2006.01)      *D01D 5/22* (2006.01)
*D02G 3/04* (2006.01)

(52) Cooperative Patent Classification (CPC):
**D01D 5/08; D01D 5/22; D01D 5/253; D01D 5/34;
D01F 1/10; D01F 8/14; D02G 3/04**

(86) International application number:
**PCT/KR2021/010933**

(87) International publication number:
**WO 2022/039483 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2020   KR 20200103812
17.08.2021   KR 20210108267**

(71) Applicant: **HYOSUNG TNC CORPORATION
SEOUL, 04144 (KR)**

(72) Inventors:
• **KIM, Chon Ki
  Incheon 21350 (KR)**
• **KIM, Moo Song
  Anyang-si Gyeonggi-do 14070 (KR)**
• **KIM, Joong Yeol
  Anyang-si Gyeonggi-do 14049 (KR)**
• **PARK, Mee So
  Daejeon 35284 (KR)**

(74) Representative: **Westphal, Mussgnug & Partner
Patentanwälte mbB
Am Riettor 5
78048 Villingen-Schwenningen (DE)**

(54) **POLYESTER YARN, AND METHOD FOR MANUFACTURING SAME**

(57)      The present invention relates to polyester yarn containing polyester obtained by polymerization in the presence of an inorganic tin compound catalyst, and a method for manufacturing the polyester yarn, wherein the polyester yarn of the present invention which contains an inorganic tin compound may overcome problems caused by a residual antimony catalyst and may have excellent warping properties.

**EP 4 202 092 A1**

**Description**

## TECHNICAL FIELD

The present invention relates to a polyester yarn and a manufacturing method thereof, and more specifically, to a polyester yarn having excellent warping properties while overcoming problems caused by a residual antimony-based catalyst and a manufacturing method thereof.

## BACKGROUND ART

Polyester typified by polyethylene terephthalate has excellent mechanical properties and chemical properties, and thus has been widely used in various fields such as beverage containers, medical supplies, packaging materials, sheets, films, tire cords, automobile molded products, and the like. In particular, polyester yarn is inexpensive and strong compared to nylon fibers, and has various excellent properties suitable for clothing materials, such as abrasion resistance, heat resistance, chemical resistance, shape stability, drape properties, washing properties, sewing properties, etc., and thus, has been widely used for clothing, industrial, medical purposes, and the like.

The most commercially successful catalyst as a polymerization catalyst for polyester used in the manufacturing of polyester yarn is an antimony-based catalyst. However, in the case of products manufactured using an antimony-based catalyst, a large amount of antimony is required to be used in a polymerization process, and since the metal itself is toxic, when used for a long period of time, antimony is leaked and introduced into a living body, causing diseases such as fetal growth inhibition and carcinogenicity and causing environmental problems (Anal. Bioanal. Chem. 2006, 385, 821). For example, fibers made from polyester polymers prepared using a highly concentrated antimony catalyst may cause yarn breakage or other defects during a yarn making process. In addition, when the antimony catalyst is used in a polyester polymerization reaction, a reduced catalyst material is generated at about 10 % to 15% with respect to an input amount of the antimony catalyst, thereby lowering the L value of a color of polyester yarn and causing process problems such as spinneret contamination, pressure increase, and yarn breakage.

U.S. Patent Publication No. 2010-0184916 discloses a technique for preparing polyester using titanium, which is a representative eco-friendly metal, as a catalyst. However, the titanium catalyst had problems in that a resin had a high degree of yellowing, so that the color tone of the resin was not excellent, the thermal stability was not excellent, and the content of oligomers was high. Due to these disadvantages, despite the excellent activity of the metal itself, there is a limitation in that it is difficult to commercially apply the titanium catalyst to the preparation of polyester.

Meanwhile, U.S. Registration Patent No. 6,365,659 discloses a method for preparing polyester by mixing germanium, aluminum, and zirconium, which are eco-friendly metals. However, although a germanium compound catalyst itself has high activity, when the amount of a germanium catalyst used for polymerization is large, the high price of the catalyst makes it difficult to commercialize the catalyst.

## DISCLOSURE OF THE INVENTION

### TECHNICAL PROBLEM

The present invention is to solve the above-described problems of the prior art, and one object of the present invention is to provide polyester yarn that does not use an antimony-based catalyst, which is harmful to the human body and the environment, thereby having no elution amount of antimony.

Another object of the present invention is to provide polyester yarn having excellent warping properties without using an antimony-based catalyst that causes health and environmental problems.

### TECHNICAL SOLUTION

One aspect of the present invention for solving the above-described technical problems relates to a polyester yarn containing polyester obtained by polymerization in the presence of an inorganic tin compound catalyst.

The inorganic tin compound catalyst may be an inorganic tin first compound (stannous tin compound) or an inorganic tin second compound (stannic tin compound).

Non-limiting examples of the inorganic tin first compound may be selected from the group consisting of stannous oxide, stannous pyrophosphoric acid, stannous phosphoric acid, stannous tartaric acid, stannous acetic acid, stannous oxalic acid, stannous stearic acid, stannous oleic acid, stannous gluconic acid, stannous citric acid, stannous 2-ethylhexanonic acid, stannous ethoxide, stannous acetylacetonate, and stannous glycolic acid.

Non-limiting examples of the inorganic tin second compound may include stannic oxide, stannic pyrophosphoric acid, stannic phosphoric acid, stannic tartaric acid, stannic acetic acid, stannic oxalic acid, stannic stearic acid, stannic oleic acid, stannic gluconic acid, stannic citric acid, stannic 2-ethylhexanonic acid, stannic ethoxide, stannic acetylacetonate, and stannic glycolic acid.

The inorganic tin compound catalyst may be a combination of several kinds thereof, or may be used by being mixed with a known catalyst.

The polyester yarn may include one or two or more of polyethylene terephthalate, polytrimethylene terephthalate, polytetramethylene terephthalate, and polybutylene terephthalate, and may include 10 ppm to 200 ppm of the residue of an inorganic tin compound.

The polyester yarn may be a core-sheath type composite fiber, and the polyester may be disposed in a sheath portion of the core-sheath type composite fiber.

The polyester yarn of the present invention may be non-circular cross-section yarn or false-twist crimped yarn.

Another aspect of the present invention for solving the above-described technical problems relates to a method for manufacturing polyester yarn, the method characterized by polymerizing a polymerization starting material composed of an esterification product of a dicarboxylic acid component and a glycol component in the presence of an inorganic tin compound catalyst to obtain a polyester polymer, and then melt-spinning the polyester polymer to manufacture polyester yarn.

## ADVANTAGEOUS EFFECTS

According to the present invention, by using a catalyst not containing heavy metals harmful to the human body and the environment, it is possible to manufacture polyester yarn not containing components which cause environmental pollution and which are harmful to the human body.

A polyester polymerization catalyst composed of an inorganic tin compound of the present invention is not only eco-friendly and but also has high catalytic activity, so that the input amount of the catalyst may be reduced to about 1/5 or less compared to the input amount of a typical antimony catalyst, and thermal decomposition products of polyester may be reduced by 50% or greater.

The polyester yarn of the present invention has less occurrence of yarn breakage or defects in a yarn making process, so that processability is improved, and at the same time, excellent warping properties may be secured.

## BEST MODE FOR CARRYING OUT THE INVENTION

Hereinafter, the present invention will be described in more detail.

In describing the present invention, when it is determined that detailed descriptions of related known technologies may obscure the gist of the present invention, the detailed descriptions will be omitted. In the present specification, when a portion is said to "comprise(s)" any element (component), it means that the portion may further comprise(s) other elements rather than excluding the other elements (components), unless otherwise stated.

Polyester yarn of an embodiment of the present invention is characterized by including polyester obtained by polymerization in the presence of an inorganic tin compound catalyst.

The inorganic tin compound catalyst may be used alone, or two or more thereof may be used in combination or in combination with a typically known catalyst.

An organotin compound is excluded from the present invention because it is a material subject to strong environmental regulations compared an inorganic tin compound used in the present invention.

The inorganic tin compound used in the present invention has a low value of standard redox potential energy compared to that of an antimony (Sb) catalyst which is used in the related art, and thus has a significant advantage of not being easily reduced during a polyester polymerization reaction and a spinning process. The inorganic tin compound catalyst used in the present invention does not have a problem of being easily reduced during the polymerization reaction, thereby causing degradation in activity or generation of catalyst residues in a polymerization reactor due to a reduced product, and since there is less occurrence of an increase in extruder filter pressure and generation of nozzle foreign substances during the spinning process, it is possible to obtain the result of improved processability.

| Sb (Antimony) | | | Sn (Tin) | | |
|---|---|---|---|---|---|
| Before | After | R.P.E. (V) | Before | After | R.P.E. (V) |
| 5+ | 3+ | 0.746 | 4+ | 2+ | 0.150 |
| 3+ | 0 | 0.152 | 2+ | 0 | -0.136 |
| | | | 4+ | 0 | 0.010 |

The standard redox potential energy means that the larger the value, the greater the reducibility, and the smaller the value, the lower the reducibility. Antimony (Sb), which has been mainly used in polyester polymerization in the related art, has a reducing power with a positive (+) value of standard redox potential in the state of oxidation number 3 or 5 with catalytic activity. On the other hand, the inorganic tin compound used in the present invention maintains catalytic activity because the reduction thereof in the state of oxidation number 2 is involuntary (R.P.E is a negative value), and reduced products (catalyst residues) generated during polyester polymerization and extrusion processes may be reduced.

It is particularly preferable that the inorganic tin compound is tin oxalic acid, tin acetic acid, and tin glycolic acid.

The inorganic tin compound may be an inorganic tin first compound (stannous tin compound) or an inorganic tin second compound (stannic tin compound).

The inorganic tin first compound may be selected from the group consisting of stannous oxide, stannous pyrophosphoric acid, stannous phosphoric acid, stannous tartaric acid, stannous acetic acid, stannous oxalic acid, stannous stearic acid, stannous oleic acid, stannous gluconic acid, stannous citric acid, stannous 2-ethylhexanonic acid, stannous ethoxide, stannous acetylacetonate, and stannous glycolic acid.

The inorganic tin second compound may be selected from the group consisting of stannic oxide, stannic pyrophosphoric acid, stannic phosphoric acid, stannic tartaric acid, stannic acetic acid, stannic oxalic acid, stannic stearic acid, stannic oleic acid, stannic gluconic acid, stannic citric acid, stannic 2-ethylhexanonic acid, stannic ethoxide, stannic acetylacetonate, and stannic glycolic acid.

The inorganic tin compound catalyst of the present invention may be introduced at any stage during polyester polymerization. For example, the inorganic tin compound catalyst of the present invention may be introduced only when preparing a slurry (EG/TPA mixture) before an esterification reaction step, introduced only in the esterification reaction step, or introduced only in a polycondensation step of an esterification reactant, or introduced when preparing a slurry before an esterification reaction step, in the esterification reaction step, and in a polycondensation step. However, when polyester is prepared by an esterification reaction of a dicarboxylic acid component and a glycol component, followed by polycondensation of a reactant, it is preferable that the inorganic tin compound catalyst is added in the polycondensation step of the esterification reactant.

The inorganic tin compound catalyst may be used in both a method in which the catalyst itself is added as powder or in the form of a catalyst solution in a polyester process, and a method in which the catalyst is prepared in an ethylene glycol solution and then introduced. However, when the catalyst is prepared in an ethylene glycol solution and introduced, the catalyst may be prepared in the form of tin glycolic acid by reacting the ethylene glycol solution with the inorganic tin compound.

An antimony-based catalyst used as a typical polyester polymerization catalyst has low catalytic activity, and thus 50 ppm to 500 ppm (based on the amount of Sb element) thereof based on polyester is used. On the other hand, in the case of the inorganic tin compound catalyst newly applied in the present invention, it is possible to sufficiently secure equivalent polycondensation reactivity even with a small amount of 10 ppm to 200 ppm, preferably 10 ppm to 100 ppm (based on the amount of Sn element), of the catalyst. Due to such a low catalyst content, catalytic foreign matters of polyester are reduced, and the generation of foreign matters caused by a catalytic reduced material is reduced in a spinning process, so that an effect of reducing die foreign matters may be obtained.

Unlike the antimony-based catalyst, the inorganic tin compound catalyst of the present invention has relatively low toxicity of the metal itself, and thus is less likely to cause problems in humans and the environment, and does not release antimony.

Polyester yarn manufactured using a titanium compound catalyst, which is another non-antimony catalyst, has no elution of antimony but has a problem of poor warping properties, whereas the polyester yarn of the present invention manufactured using an inorganic tin compound catalyst may have excellent warping properties without the elution of antimony.

A polyester polymer used in the present invention contains at least 85 mol% of ethylene terephthalate units, and preferably, is composed only of ethylene terephthalate units. Optionally, the polyester may incorporate small amounts of units derived from one or more ester-forming components other than ethylene glycol and aromatic dicarboxylic acids or derivatives thereof as copolymer units.

Examples of other ester-forming components copolymerizable with the ethylene terephthalate units include glycols such as 1,3-propanediol, 1,4-butanediol, and 1,6-hexanediol, and dicarboxylic acids such as terephthalic acid, isophthalic acid, hexahydroterephthalic acid, stilbene dicarboxylic acid, bibenzoic acid, adipic acid, sebacic acid, and azelaic acid.

In the polyester yarn, the cross-sectional shape of short fiber is not particularly limited. In addition, such polyester yarn may have been subjected to typical air processing, false-twist crimping, or twisting.

The strength of the polyester yarn according to the present invention is preferably 3.0 g/d or greater, but when the strength is less than 3.0 g/d, the strength is lowered, and the tear strength is lowered when the polyester yarn is manufactured into a fabric, which is not preferable.

The polyester yarn of the present invention may be processed into a fabric such as a woven fabric, a knitted fabric, or a non-woven fabric. For example, examples of the woven texture of the woven fabric include three foundation weaves such as plain weave, twill weave, and satin weave, derivative weave such as derivative weave and derivative twill weave, half-double weave such as warp backed weave and weft backed weave, warp pile weave such as warp velvet, towel, and velour, and weft pile weave such as velveteen, weft velvet, velvet, and corduroy. In addition, the woven fabric having such a woven texture may be woven by a typical method using a typical loom such as a rapier loom or an air-jet loom. The number of layers of the woven fabric is not particularly limited, and the fabric may be a single-layered fabric, or may be a fabric having a multi-layered structure of two or more layers.

In addition, the knitted fabric may be a weft knitted fabric or a warp knitted fabric. Preferred examples of a weft knitted texture include plain stitch, rib stitch, double-sided stitch, purl stitch, tuck stitch, float stitch, half-cardigan stitch, lace stitch and plating stitch, and preferred examples of a warp knitted texture include single Denbigh stitch, single atlas stitch, double cord stitch, half-tricot stitch, fleecy stitch and jacquard stitch. The knitting can be carried out by a typical ordinary method using a typical knitting machine such as a circular knitting machine, a flat knitting machine, a tricot knitting machine, or a raschel knitting machine. The number of layers of the knitted fabric is not particularly limited, and the fabric may be a single-layered fabric, or may be a fabric having a multi-layered structure of two or more layers.

Next, a textile product of the present invention is manufactured using the above fabric, and is any one textile product selected from the group consisting of sportswear, outdoor wear, raincoats, umbrella cloth, men's wear, women's wear, work clothing, protective clothing, artificial leather, shoes, bags, curtains, waterproof sheets, tents, and car seats.

Another aspect of the present invention relates to a method for manufacturing polyester yarn. In the method of the present invention, a polymerization starting material composed of an esterification product of a dicarboxylic acid component and a glycol component is polymerized in the presence of an inorganic tin compound catalyst to obtain a polyester polymer, and then the polyester polymer is melt-spun to manufacture the polyester yarn.

When preparing the polyester polymer, the dicarboxylic acid component and the glycol component are polymerized in the presence of a catalyst composition including an inorganic tin compound.

The polymerizing of the dicarboxylic acid component and the glycol component may include subjecting the dicarboxylic acid component and the glycol component to an esterification reaction and polycondensing a reactant of the esterification reaction. In the esterification reaction step, after a low polymer is obtained by a transesterification reaction, organic polymer particles and various additives may be added to the low polymer, and then an inorganic tin compound may be added as a polycondensation catalyst to perform a polycondensation reaction, thereby obtaining polyester having a high molecular weight.

More specifically, first, the dicarboxylic acid component and the glycol component are subjected to an ester reaction. According to an embodiment of the present invention, examples of the dicarboxylic acid component may include terephthalic acid, oxalic acid, malonic acid, azelaic acid, fumaric acid, pimelic acid, suberic acid, isophthalic acid, dodecane dicarboxylic acid, naphthalene dicarboxylic acid, biphenyldicarboxylic acid, 1,4-cyclohexane dicarboxylic acid, 1,3-cyclohexane dicarboxylic acid, succinic acid, glutaric acid, adipic acid, sebacic acid, 2,6-naphthalene dicarboxylic acid, 1,2-norbornane dicarboxylic acid, 1,3-cyclohexane dicarboxylic acid, 1,4-cyclohexane dicarboxylic acid, 1,3-cyclobutane dicarboxylic acid, 1,4-cyclohexane dicarboxylic acid, 5-sodium sulfoisophthalic acid, 5-potassium sulfoisophthalic acid, 5-lithium sulfoisophthalic acid, 2-sodium sulfoterephthalic acid, or the like, but are not particularly limited thereto. In addition to the above-described dicarboxylic acids, other dicarboxylic acids not exemplified above may also be used as long as the objects of the present invention are not impaired. According to an embodiment of the present invention, terephthalic acid may be used as the dicarboxylic acid component.

According to an embodiment of the present invention, examples of the glycol component may include ethylene glycol, 1,2-propylene glycol, 1,2-butylene glycol, 1,3-butylene glycol, 2,3-butylene glycol, 1,4-butylene glycol, 1,5-pentanediol, neopentyl glycol, 1,3-propylene glycol, diethylene glycol, triethylene glycol, 1,2-cyclohexane diol, 1,3-cyclohexane diol, 1,4-cyclohexane diol, propane diol, 1,6-hexane diol, neopentyl glycol, tetramethylcyclobutane diol, 1,4-cyclohexane diethanol, 1,10-decamethylene glycol, 1,12-dodecane diol, polyoxyethylene glycol, polyoxymethylene glycol, polyoxytetramethylene glycol, glycerol, or the like, but are not particularly limited thereto, and other glycols may be used as long as the objects of the present invention are not impaired. Preferably, ethylene glycol may be used as the glycol component.

According to an embodiment of the present invention, the esterification reaction of the dicarboxylic acid component and the glycol component may be performed by reacting the dicarboxylic acid component and the glycol component at a temperature of about 200 °C to about 300 °C, preferably about 230 °C to about 280 °C, for about 1 hour to about 6 hours, preferably about 2 hours to about 5 hours.

Thereafter, the reactant of the esterification reaction is polycondensed. The polycondensation of the reactant of the esterification reaction may be performed at a temperature of about 200 °C to about 300 °C, preferably about 260 °C to about 290 °C, and a reduced pressure of about 0.1 torr to about 1 torr for about 1 hour to about 3 hours, preferably about 1 hour and 30 minutes to about 2 hours and 30 minutes.

The inorganic tin compound catalyst of the present invention may be introduced when preparing a slurry before the esterification reaction, during the esterification reaction, or before the polycondensation step after the esterification reaction. However, when the inorganic tin compound catalyst of the present invention is introduced during the esterification reaction, there is an effect of improving the esterification reaction, but there may be problems in that the effect of improving the polycondensation time is poor and the content of diethylene glycol (DEG), which is a side reactant, may slightly increase during the esterification reaction, so that in the present invention, it is preferable to introduce the inorganic tin compound catalyst in the polycondensation step of the reactant after the esterification reaction. In this way, compared to a case of using a typical catalyst, the polycondensation time may be significantly shortened, thereby improving productivity.

In the method for manufacturing polyester yarn of the present invention, the inorganic tin compound catalyst may be used in an amount of about 200 ppm or less, for example, about 10 ppm to about 200 ppm, preferably about 10 ppm to about 100 ppm, based on the content of a tin element included in the inorganic tin compound catalyst with respect to the weight of polyester finally produced. In the present invention, when the amount of the inorganic tin compound catalyst is less than 10 ppm, the polymerization reaction rate decreases, thereby producing a polymer having low viscosity, so that when manufacturing the yarn, physical properties are low and spinning workability is poor, resulting in reduced productivity. When the amount of the inorganic tin compound catalyst is greater than 200 ppm, more than enough amount of the inorganic tin compound may act as a foreign substance, so that spinning and stretching workability may be degraded, resulting in reduced warping properties.

According to the present invention, by using an inorganic tin compound, a polycondensation reaction may be performed even with a small amount of a catalyst. In addition, a product of high viscosity may be obtained with a short reaction time. Since the amount of a catalyst used may be decreased as described above, the grayish phenomenon of a polyester polymer produced after polymerization may be reduced and the viscosity, which is typically low, may be increased, which is very industrially advantageous.

According to the method for manufacturing polyester yarn of the present invention, the polyester may be formed by liquid-phase polymerization, and the polyester formed at this time may have an intrinsic viscosity in the range of about 0.50 dl/g to about 0.75 dl/g.

When the intrinsic viscosity of the polyester is less than 0.50 dl/g, the tensile strength of the polyester yarn may be degraded. On the contrary, when the intrinsic viscosity of the polyester is greater than 0.75 dl/g, productivity may be degraded when manufacturing the polyester yarn.

A method for spinning the polyester polymer is capable of manufacturing a fiber according to a typical melt-spinning method, and a method in which spinning and stretching are performed in two steps and a method in which spinning and stretching is performed in one step may be employed.

In the spinning process, polyester chips are melted at a temperature of 280 °C to 320 °C, extruded and spun, and then rapidly cooled and solidified. In the cooling step, depending on a method for blowing cooling air, an open quenching method, a circular closed quenching method, a radial outflow quenching method, a radial inflow quenching method, and the like may be applied. In general, the temperature of the cooling air is adjusted to 20 °C to 50 °C. Outlet yarn solidified through cooling may be oiled by an emulsion imparting device.

Hereinafter, the present invention will be described in more detail with reference to embodiments according to the present invention. However, the embodiments are only presented as examples of the invention, and the scope of the present invention is not limited thereby.

Examples

Example 1

Preparation of catalyst solution

5 g of an inorganic tin compound catalyst shown in Table 1 below was diluted in ethylene glycol to a total weight of 2 kg, and stirred at a stirring speed of 400 rpm to prepare an inorganic tin compound catalyst at a concentration of 0.25% in ethylene glycol. Thereafter, the inorganic tin compound catalyst was reacted in a refluxable reactor at a reaction temperature of 160 °C to 180 °C for 2 hours to prepare an inorganic tin compound catalyst solution.

Manufacturing of polyester chip

7.8 kg of terephthalic acid (TPA) and 3.3 kg of ethylene glycol (EG) were prepared as a slurry (EG/TPA molar ratio = 1.13) and introduced into an esterification reactor in a semi-batch manner to be reacted until the reaction temperature reached 265 °C in an atmospheric pressure reaction under a nitrogen atmosphere so as to prepare a polyester oligomer. At this time, the esterification reaction temperature, a temperature at which the slurry was introduced, was 253 °C, and the final esterification reaction end temperature was 265 °C, and the reaction time was about 3 hours and 30 minutes. The PET oligomer prepared in the esterification reactor was transferred to a polycondensation reactor, and 200 ppm of a tin oxide catalyst based on the finally obtained PET was added thereto, and polycondensation was performed thereon under high-vacuum reduced pressure for about 2 hours and 30 minutes until the reaction temperature reached 288 °C. After the polycondensation reaction, the mixture was solidified using cooling water to obtain a polyethylene terephthalate polymer having an intrinsic viscosity (IV) of about 0.60 dl/g to about 0.65 dl/g.

Manufacturing of polyester yarn

The prepared chips were melt-spun at a temperature of 290 °C using an extruder, and then the outlet yarn was solidified by passing through a heating zone (ambient temperature 340 °C) having a length of 60 mm directly under a nozzle and a cooling zone (20 °C, blowing of cooling air having a wind speed of 0.5 m/sec) having a length of 500 mm, and then oiled with a spinning emulsion (containing 70% of a paraffin oil component). The above was wound at a spinning speed of 4,500 m/min and a stretch ratio of 2.25 to manufacture final polyester yarn of 50d/24f.

Examples 2 to 100

Polyester yarn was manufactured in the same manner as in Example 1, except that polyester chips, which were prepared using 10 ppm to 200 ppm of each of the inorganic tin compounds shown in Table 1 to Table 5 below as a catalyst, were used.

Comparative Example 1

Polyester yarn was manufactured in the same manner as in Example 1, except that a catalyst was not used.

Comparative Example 2

40 g of an antimony compound was dissolved in ethylene glycol to a total weight of 2 kg, and stirred at 400 rpm to prepare a catalyst solution. In a refluxable reactor, the catalyst solution was reacted at a reaction temperature of 180 °C to 190 °C for 2 hours to prepare an antimony glycolate solution. Polyester yarn was manufactured in the same manner as in Example 1, except that polyester polymerized using the obtained antimony compound catalyst solution was used.

Comparative Examples 3 to 9

Polyester yarn was manufactured in the same manner as in Example 1, except that a polyester polymer prepared using the antimony catalyst shown in Table 1 below as a catalyst was used.

Comparative Example 10

40 g of a titanium compound was dissolved in ethylene glycol to a total weight of 2 kg, and stirred at 400 rpm to prepare a catalyst solution. In a refluxable reactor, the catalyst solution was reacted at a reaction temperature of 180 °C to 190 °C for 2 hours to prepare an titanium glycolate solution. Polyester yarn was manufactured in the same manner as in Example 1, except that polyester polymerized using the obtained titanium catalyst solution was used.

Comparative Examples 11 to 17

Polyester yarn was manufactured in the same manner as in Example 1, except that a polyester polymer prepared using the titanium compound catalyst shown in Table 1 below as a catalyst was used.

Comparative Examples 18 to 77

Polyester yarn was manufactured in the same manner as in Example 1, except that a polyester polymer, which was prepared using 1 ppm or 8 ppm to 500 ppm of each of the inorganic tin compounds shown in Table 1 to Table 5 below as a catalyst, was used.

Test Example

Physical properties of each of the polyester yarn manufactured according to Examples 1 to 100 and Comparative Examples 1 to 77 were evaluated by the following method, and the results are shown in Table 1 to Table 5 below.

(1) Method for measuring strength and elongation of yarn

The yarn is left to stand for 24 hours in a constant temperature and humidity chamber under conditions of a standard state, that is, a temperature of 25 °C and a relative humidity of 65%, a sample is tested using a tensile tester by the ASTM 2256 method.

(2) Number of yarn breakage in spinning process

In a spinning machine of 8pos., the number of yarn breakage is recorded during a 24-hour spinning.

$$\text{Number of yarn breakage (ea/pos./day)} = \text{number of yarn breakage/8pos.} \times 24 \text{ hours/manufacturing time}$$

(3) Warping properties

The yarn is put into a beamer, and the number of work interruptions (the work interruption due to yarn breakage is detected by a sensor) of warped yarn is recorded, and is shown as the number of work interruptions per ten million m. The warping properties vary depending on a user, but in general, when the number of work interruptions of yarn is equal to or greater than 0.5 ea/ten million m, the yarn is considered to be defective, and when the number of work interruptions of yarn is equal to or greater than 1.0 ea/ten million m, the yarn cannot be made into a fabric.

(4) Antimony elution amount

The antimony elution amount is measured by the DIN EN 16711-2 (2016) method.

[Table 1]

| | | | Metal content in catalyst (ppm) | Strength (g/d) | Elongation (%) | Number of yarn breakage (ea/pos./day) | Warping properties (ea/ten million m) | Antimony elution amount (ppm) |
|---|---|---|---|---|---|---|---|---|
| Catalyst not used | | Comparative Example 1 | 0 | 2.20 | 22.8 | 6.23 | 1.04 | - |
| Antimony compound | Antimony triglycolate (P) | Comparative Example 2 | 500 | 5.82 | 30.0 | 0.48 | 0.49 | 4.8 |
| | | Comparative Example 3 | 200 | 5.51 | 32.0 | 0.17 | 0.08 | 2.0 |
| | | Comparative Example 4 | 100 | 4.49 | 29.0 | 0.13 | 0.06 | 0.9 |
| | | Comparative Example 5 | 40 | 3.13 | 30.1 | 7.68 | 1.28 | 0.5 |
| | | Comparative Example 6 | 20 | 2.85 | 31.1 | 6.06 | 1.01 | 0.4 |
| | | Comparative Example 7 | 10 | 3.18 | 21.3 | 5.46 | 0.91 | 0.2 |
| | | Comparative Example 8 | 8 | 3.36 | 19.0 | 6.42 | 1.07 | 0.2 |
| | | Comparative Example 9 | 1 | 3.52 | 19.7 | 6.68 | 1.11 | 0.1 |

(continued)

| | | | Metal content in catalyst (ppm) | Strength (g/d) | Elongation (%) | Number of yarn breakage (ea/pos./da y) | Warping propertie s (ea/ten million m) | Antimon y elution amount (ppm) |
|---|---|---|---|---|---|---|---|---|
| Titanium compound | Titanium butoxide (L) | Comparative Example 10 | 500 | 5.30 | 34.3 | 0.18 | 2.09 | - |
| | | Comparative Example 11 | 200 | 5.12 | 36.0 | 0.19 | 2.10 | - |
| | | Comparative Example 12 | 100 | 4.88 | 39.9 | 0.18 | 2.09 | - |
| | | Comparative Example 13 | 40 | 5.53 | 30.8 | 0.09 | 2.04 | - |
| | | Comparative Example 14 | 20 | 4.91 | 39.9 | 0.11 | 2.05 | - |
| | | Comparative Example 15 | 10 | 4.74 | 39.9 | 0.09 | 2.04 | - |
| | | Comparative Example 16 | 8 | 4.55 | 30.0 | 7.21 | 3.20 | - |
| | | Comparative Example 17 | 1 | 4.16 | 32.7 | 6.91 | 3.15 | - |

(continued)

| | | | Metal content in catalyst (ppm) | Strength (g/d) | Elongation (%) | Number of yarn break-age (ea/pos./da y) | Warping propertie s (ea/ten million m) | Antimon y elution amount (ppm) |
|---|---|---|---|---|---|---|---|---|
| Inorganic tin first compound (stannous tin compound) | Tin oxide (P) | Comparative Example 18 | 500 | 5.08 | 39.6 | 0.38 | 0.39 | - |
| | | Example 1 | 200 | 5.07 | 37.5 | 0.18 | 0.09 | - |
| | | Example 2 | 100 | 5.09 | 38.1 | 0.16 | 0.08 | - |
| | | Example 3 | 40 | 5.41 | 34.6 | 0.10 | 0.05 | - |
| | | Example 4 | 20 | 5.87 | 29.8 | 0.09 | 0.05 | - |
| | | Example 5 | 10 | 5.50 | 33.8 | 0.09 | 0.04 | - |
| | | Comparative Example 19 | 8 | 4.94 | 33.1 | 7.20 | 1.20 | - |
| | | Comparative Example 20 | 1 | 4.73 | 31.5 | 6.76 | 1.13 | - |
| | Tin pyrophosphat e (P) | Comparative Example 21 | 500 | 5.08 | 39.4 | 0.37 | 0.49 | - |
| | | Example 6 | 200 | 5.59 | 33.0 | 0.17 | 0.08 | - |
| | | Example 7 | 100 | 5.55 | 32.9 | 0.17 | 0.09 | - |
| | | Example 8 | 40 | 5.39 | 33.9 | 0.09 | 0.04 | - |
| | | Example 9 | 20 | 5.28 | 36.6 | 0.09 | 0.05 | - |
| | | Example 10 | 10 | 5.10 | 37.6 | 0.09 | 0.05 | - |
| | | Comparative Example 22 | 8 | 4.44 | 36.2 | 6.51 | 1.09 | - |
| | | Comparative Example 23 | 1 | 4.59 | 30.8 | 6.39 | 1.07 | - |
| | Tin phosphate (P) | Comparative Example 24 | 500 | 5.13 | 37.8 | 0.37 | 0.38 | - |
| | | Example 11 | 200 | 5.08 | 37.8 | 0.18 | 0.09 | - |
| | | Example 12 | 100 | 5.48 | 34.2 | 0.17 | 0.09 | - |
| | | Example 13 | 40 | 5.26 | 35.9 | 0.09 | 0.04 | - |
| | | Example 14 | 20 | 5.16 | 38.4 | 0.10 | 0.05 | - |
| | | Example 15 | 10 | 5.33 | 35.1 | 0.09 | 0.04 | - |
| | | Comparative Example 25 | 8 | 5.12 | 31.2 | 7.33 | 1.22 | - |
| | | Comparative Example 26 | 1 | 5.17 | 28.6 | 6.99 | 1.16 | - |

[Table 2]

| | | | Metal content in catalyst (ppm) | Strength (g/d) | Elongation (%) | Number of yarn breakage (ea/pos./da y) | Warping properties (ea/ten million m) | Antimony elution amount (ppm) |
|---|---|---|---|---|---|---|---|---|
| Inorganic tin first compound (stannous tin compound) | Tin tartrate (P) | Comparative Example 27 | 500 | 5.57 | 30.6 | 0.46 | 0.58 | - |
| | | Example 16 | 200 | 5.29 | 34.2 | 0.16 | 0.08 | - |
| | | Example 17 | 100 | 5.64 | 30.1 | 0.18 | 0.09 | - |
| | | Example 18 | 40 | 5.17 | 36.9 | 0.09 | 0.05 | - |
| | | Example 19 | 20 | 5.39 | 34.2 | 0.10 | 0.05 | - |
| | | Example 20 | 10 | 5.18 | 36.3 | 0.10 | 0.05 | - |
| | | Comparative Example 28 | 8 | 4.95 | 38.2 | 0.08 | 0.04 | - |
| | | Comparative Example 29 | 1 | 5.28 | 30.0 | 7.25 | 1.21 | - |
| | Tin acetate (P) | Comparative Example 30 | 500 | 5.79 | 30.2 | 0.47 | 0.49 | - |
| | | Example 21 | 200 | 5.71 | 30.0 | 0.18 | 0.09 | - |
| | | Example 22 | 100 | 5.28 | 33.7 | 0.17 | 0.09 | - |
| | | Example 23 | 40 | 5.70 | 30.5 | 0.09 | 0.05 | - |
| | | Example 24 | 20 | 5.40 | 35.2 | 0.09 | 0.05 | - |
| | | Example 25 | 10 | 5.58 | 33.3 | 0.09 | 0.05 | - |
| | | Comparative Example 31 | 8 | 5.09 | 31.7 | 7.34 | 1.22 | - |
| | | Comparative Example 32 | 1 | 4.37 | 37.0 | 6.50 | 1.08 | - |
| | Tin oxalate (P) | Comparative Example 33 | 500 | 5.51 | 34.1 | 0.48 | 0.42 | - |
| | | Example 26 | 200 | 5.31 | 36.3 | 0.17 | 0.08 | - |
| | | Example 27 | 100 | 5.57 | 31.8 | 0.18 | 0.09 | - |
| | | Example 28 | 40 | 5.60 | 33.1 | 0.09 | 0.05 | - |
| | | Example 29 | 20 | 5.56 | 33.3 | 0.08 | 0.04 | - |
| | | Example 30 | 10 | 5.04 | 38.8 | 0.08 | 0.04 | - |
| | | Comparative Example 34 | 8 | 5.25 | 31.2 | 0.08 | 0.04 | - |
| | | Comparative Example 35 | 1 | 4.72 | 32.1 | 6.80 | 1.13 | - |

(continued)

| | | | Metal content in catalyst (ppm) | Strength (g/d) | Elongation (%) | Number of yarn breakage (ea/pos./da y) | Warping properties (ea/ten million m) | Antimony elution amount (ppm) |
|---|---|---|---|---|---|---|---|---|
| Tin stearate (P) | | Comparative Example 36 | 500 | 5.79 | 30.2 | 0.38 | 0.39 | - |
| | | Example 31 | 200 | 5.28 | 35.7 | 0.18 | 0.09 | - |
| | | Example 32 | 100 | 5.54 | 31.2 | 0.18 | 0.09 | - |
| | | Example 33 | 40 | 5.57 | 33.0 | 0.09 | 0.05 | - |
| | | Example 34 | 20 | 5.21 | 36.8 | 0.08 | 0.04 | - |
| | | Example 35 | 10 | 5.15 | 35.2 | 0.09 | 0.04 | - |
| | | Comparative Example 37 | 8 | 4.98 | 34.2 | 0.08 | 0.04 | - |
| | | Comparative Example 38 | 1 | 4.64 | 34.4 | 6.95 | 1.16 | - |
| Tin oleate (P) | | Comparative Example 39 | 500 | 5.38 | 33.3 | 0.47 | 0.45 | - |
| | | Example 36 | 200 | 5.31 | 36.0 | 0.17 | 0.09 | - |
| | | Example 37 | 100 | 5.42 | 32.1 | 0.17 | 0.08 | - |
| | | Example 38 | 40 | 5.40 | 33.0 | 0.09 | 0.05 | - |
| | | Example 39 | 20 | 5.40 | 35.0 | 0.09 | 0.05 | - |
| | | Example 40 | 10 | 5.36 | 34.5 | 0.09 | 0.04 | - |
| | | Comparative Example 40 | 8 | 5.05 | 34.4 | 0.09 | 0.04 | - |
| | | Comparative Example 41 | 1 | 4.86 | 35.5 | 0.08 | 1.04 | - |

[Table 3]

| | | | Metal content in catalyst (ppm) | Strength (g/d) | Elongation (%) | Number of yarn breakage (ea/pos.Ida Y) | Warping properties (ea/ten million m) | Antimony elution amount (ppm) |
|---|---|---|---|---|---|---|---|---|
| Inorganic tin first compound (stannous tin compound) | Tin gluconate (P) | Comparative Example 42 | 500 | 5.36 | 36.0 | 0.37 | 0.34 | - |
| | | Example 41 | 200 | 5.63 | 31.3 | 0.17 | 0.09 | - |
| | | Example 42 | 100 | 5.76 | 30.9 | 0.18 | 0.09 | - |
| | | Example 43 | 40 | 5.64 | 31.9 | 0.09 | 0.05 | - |
| | | Example 44 | 20 | 5.03 | 39.0 | 0.10 | 0.05 | - |
| | | Example 45 | 10 | 5.57 | 30.6 | 0.09 | 0.05 | - |
| | | Comparative Example 43 | 8 | 4.74 | 37.5 | 0.09 | 0.04 | - |
| | | Comparative Example 44 | 1 | 4.67 | 32.5 | 6.51 | 1.09 | - |
| | Tin citrate (P) | Comparative Example 45 | 500 | 5.70 | 30.0 | 0.32 | 0.37 | - |
| | | Example 46 | 200 | 5.71 | 30.5 | 0.18 | 0.09 | - |

(continued)

| | | | Metal content in catalyst (ppm) | Strength (g/d) | Elongation (%) | Number of yarn breakage (ea/pos.Ida Y) | Warping properties (ea/ten million m) | Antimony elution amount (ppm) |
|---|---|---|---|---|---|---|---|---|
| | | Example 47 | 100 | 5.02 | 38.9 | 0.18 | 0.09 | - |
| | | Example 48 | 40 | 5.19 | 36.0 | 0.09 | 0.05 | - |
| | | Example 49 | 20 | 5.60 | 30.7 | 0.08 | 0.04 | - |
| | | Example 50 | 10 | 5.69 | 31.6 | 0.09 | 0.04 | - |
| | | Comparative Example 46 | 8 | 4.81 | 35.1 | 7.25 | 1.21 | - |
| | | Comparative Example 47 | 1 | 4.51 | 33.5 | 6.59 | 1.10 | - |
| | Tin 2-ethylhexanoate (L) | Comparative Example 48 | 500 | 5.16 | 36.9 | 0.48 | 0.45 | - |
| | | Example 51 | 200 | 5.54 | 32.0 | 0.17 | 0.08 | - |
| | | Example 52 | 100 | 5.15 | 36.8 | 0.18 | 0.09 | - |
| | | Example 53 | 40 | 5.42 | 33.9 | 0.09 | 0.05 | - |
| | | Example 54 | 20 | 5.38 | 35.2 | 0.08 | 0.04 | - |
| | | Example 55 | 10 | 5.44 | 33.4 | 0.10 | 0.05 | - |
| | | Comparative Example 49 | 8 | 4.79 | 36.7 | 7.37 | 1.23 | - |
| | | Comparative Example 50 | 1 | 4.38 | 34.1 | 6.18 | 1.03 | - |
| | Tin ethoxide (P) | Comparative Example 51 | 500 | 5.16 | 37.6 | 0.49 | 0.37 | - |
| | | Example 56 | 200 | 5.06 | 39.7 | 0.18 | 0.09 | - |
| | | Example 57 | 100 | 5.27 | 35.2 | 0.17 | 0.08 | - |
| | | Example 58 | 40 | 5.61 | 31.8 | 0.09 | 0.04 | - |
| | | Example 59 | 20 | 5.09 | 38.2 | 0.08 | 0.04 | - |
| | | Example 60 | 10 | 5.52 | 33.7 | 0.08 | 0.04 | - |
| | | Comparative Example 52 | 8 | 4.63 | 37.1 | 6.95 | 1.16 | - |
| | | Comparative Example 53 | 1 | 4.75 | 29.1 | 6.24 | 1.04 | - |
| | Tin acetylacetonate (L) | Comparative Example 54 | 500 | 5.11 | 37.3 | 0.41 | 0.36 | - |
| | | Example 61 | 200 | 4.99 | 37.0 | 0.17 | 0.08 | - |
| | | Example 62 | 100 | 5.32 | 34.2 | 0.18 | 0.09 | - |
| | | Example 63 | 40 | 4.98 | 38.8 | 0.09 | 0.04 | - |
| | | Example 64 | 20 | 5.21 | 38.1 | 0.09 | 0.05 | - |
| | | Example 65 | 10 | 5.13 | 36.6 | 0.10 | 0.05 | - |
| | | Comparative Example 55 | 8 | 4.50 | 35.5 | 6.73 | 1.12 | - |
| | | Comparative Example 56 | 1 | 4.55 | 26.8 | 5.81 | 0.97 | - |

[Table 4]

| | | | Metal content in catalyst (ppm) | Strength (g/d) | Elongati on (%) | Number of yarn breakage (ea/pos./da y) | Warping propertie s (ea/ten million m) | Antimon Y elution amount (ppm) |
|---|---|---|---|---|---|---|---|---|
| Inorganic tin first compound (stannous tin compound) | Tin glycolate (P, L) | Comparative Example 57 | 500 | 5.34 | 34.7 | 0.36 | 0.38 | - |
| | | Example 66 | 200 | 5.21 | 38.1 | 0.18 | 0.09 | - |
| | | Example 67 | 100 | 5.78 | 29.9 | 0.17 | 0.08 | - |
| | | Example 68 | 40 | 5.20 | 39.6 | 0.10 | 0.05 | - |
| | | Example 69 | 20 | 5.79 | 30.8 | 0.10 | 0.05 | - |
| | | Example 70 | 10 | 5.83 | 30.0 | 0.09 | 0.05 | - |
| | | Comparative Example 58 | 8 | 5.02 | 34.2 | 0.09 | 0.05 | - |
| | | Comparative Example 59 | 1 | 4.46 | 36.6 | 6.73 | 1.12 | - |

(continued)

| Inorganic tin second compound (stannic tin compound) | | | Metal content in catalyst (ppm) | Strength (g/d) | Elongation (%) | Number of yarn breakage (ea/pos./da y) | Warping propertie s (ea/ten million m) | Antimon Y elution amount (ppm) |
|---|---|---|---|---|---|---|---|---|
| | Tin oxide (P) | Comparative Example 60 | 500 | 4.98 | 38.9 | 0.34 | 0.39 | - |
| | | Example 71 | 200 | 5.67 | 31.4 | 0.17 | 0.08 | - |
| | | Example 72 | 100 | 5.55 | 30.5 | 0.17 | 0.08 | - |
| | | Example 73 | 40 | 5.15 | 38.8 | 0.09 | 0.04 | - |
| | | Example 74 | 20 | 5.22 | 36.3 | 0.09 | 0.05 | - |
| | | Example 75 | 10 | 5.67 | 29.6 | 0.08 | 0.04 | - |
| | | Comparative Example 61 | 8 | 4.51 | 29.5 | 6.01 | 1.00 | - |
| | | Comparative Example 62 | 1 | 3.52 | 24.6 | 7.84 | 1.31 | - |
| | Tin stearate (P) | Comparative Example 63 | 500 | 5.44 | 34.3 | 0.32 | 0.31 | - |
| | | Example 76 | 200 | 5.71 | 30.7 | 0.17 | 0.09 | - |
| | | Example 77 | 100 | 5.36 | 35.6 | 0.16 | 0.08 | - |
| | | Example 78 | 40 | 5.23 | 36.9 | 0.09 | 0.04 | - |
| | | Example 79 | 20 | 5.58 | 30.7 | 0.09 | 0.04 | - |

| | | | Metal content in catalyst (ppm) | Strength (g/d) | Elongation (%) | Number of yarn breakage (ea/pos./da y) | Warping propertie s (ea/ten million m) | Antimon Y elution amount (ppm) |
|---|---|---|---|---|---|---|---|---|
| | | Example 80 | 10 | 5.02 | 38.7 | 0.09 | 0.05 | - |
| | | Comparative Example 64 | 8 | 4.57 | 28.9 | 6.05 | 1.01 | - |
| | | Comparative Example 65 | 1 | 3.39 | 25.8 | 7.33 | 1.22 | - |
| | Tin sulfate (L) | Comparative Example 66 | 500 | 5.33 | 35.1 | 0.57 | 0.51 | - |
| | | Example 81 | 200 | 5.63 | 32.3 | 0.16 | 0.08 | - |
| | | Example 82 | 100 | 5.10 | 38.6 | 0.18 | 0.09 | - |
| | | Example 83 | 40 | 5.48 | 31.9 | 0.09 | 0.04 | - |
| | | Example 84 | 20 | 5.24 | 35.1 | 0.08 | 0.04 | - |
| | | Example 85 | 10 | 5.40 | 32.1 | 0.09 | 0.04 | - |
| | | Comparative Example 67 | 8 | 4.54 | 27.9 | 5.83 | 0.97 | - |
| | | Comparative Example 68 | 1 | 3.36 | 25.6 | 7.00 | 1.17 | - |
| | Tin glycolate (P, L) | Comparative Example 69 | 500 | 5.61 | 31.3 | 0.47 | 0.47 | - |
| | | Example 86 | 200 | 5.14 | 37.4 | 0.17 | 0.09 | - |
| | | Example 87 | 100 | 5.17 | 37.8 | 0.17 | 0.08 | - |
| | | Example 88 | 40 | 4.98 | 38.5 | 0.08 | 0.04 | - |
| | | Example 89 | 20 | 5.58 | 32.1 | 0.09 | 0.05 | - |
| | | Example 90 | 10 | 5.15 | 35.8 | 0.09 | 0.04 | - |
| | | Comparative Example 70 | 8 | 4.59 | 28.6 | 5.99 | 1.00 | - |
| | | Comparative Example 71 | 1 | 3.03 | 30.3 | 7.47 | 1.25 | - |

EP 4 202 092 A1

[Table 5]

| | | | Metal content in catalyst (ppm) | Strength (g/d) | Elongation (%) | Number of yarn breakage (ea/pos./ day ) | Warping properties (ea/ten million m) | Antimony elution amount (ppm) |
|---|---|---|---|---|---|---|---|---|
| Inorganic tin second compound (stannic tin compound) | Tin acetate (P) | Comparative Example 72 | 500 | 5.04 | 38.9 | 0.35 | 0.38 | - |
| | | Example 91 | 200 | 5.48 | 34.7 | 0.18 | 0.09 | - |
| | | Example 92 | 100 | 5.74 | 31.3 | 0.17 | 0.08 | - |
| | | Example 93 | 40 | 5.48 | 32.3 | 0.10 | 0.05 | - |
| | | Example 94 | 20 | 5.70 | 30.1 | 0.10 | 0.05 | - |
| | | Example 95 | 10 | 5.15 | 35.9 | 0.09 | 0.04 | - |
| | | Comparative Example 73 | 8 | 4.60 | 32.2 | 6.51 | 1.09 | - |
| | | Comparative Example 74 | 1 | 3.20 | 24.5 | 6.95 | 1.16 | - |
| | Tin oxalate (P) | Comparative Example 75 | 500 | 5.33 | 34.6 | 0.37 | 0.38 | - |
| | | Example 96 | 200 | 5.83 | 30.0 | 0.17 | 0.08 | - |
| | | Example 97 | 100 | 5.76 | 30.2 | 0.18 | 0.09 | - |
| | | Example 98 | 40 | 5.76 | 29.7 | 0.08 | 0.04 | - |
| | | Example 99 | 20 | 5.35 | 34.7 | 0.08 | 0.04 | - |
| | | Example 100 | 10 | 5.47 | 32.3 | 0.09 | 0.05 | - |
| | | Comparative Example 76 | 8 | 4.31 | 34.1 | 6.20 | 1.03 | - |
| | | Comparative Example 77 | 1 | 4.09 | 28.8 | 10.52 | 1.75 | - |

Referring to Table 1 to Table 5, it can be confirmed that in the case of Examples 1 to 100, the manufactured polyethylene terephthalate yarn has physical properties which are as excellent as or superior to those of Comparative Examples 2 to 9 in which the antimony catalyst was used, and has no elution of antimony. In addition, it can be confirmed that Comparative Examples 10 to 17 in which the titanium compound was used have no elution of antimony but have high warping properties, and thus, are not suitable to be used as yarn.

## INDUSTRIAL APPLICABILITY

According to the present invention, polyester yarn having excellent manufacturing processability may be provided. The polyester yarn has almost no fluff, thereby having excellent warping properties, and makes it possible to manufacture very high-quality medical yarn with no elution of antimony. The polyester yarn of the present invention may be advantageously used for high-quality clothing, interior textile materials, and the like.

Although the present invention has been described above with reference to limited embodiments, the present invention is not limited thereto, and various modifications and variations may be made to the technical spirit of the present invention by those skilled in the art to which the present invention belongs. Therefore, the true scope of protection of the present invention should be determined by the claims described below and the scope equivalent thereto.

### Claims

1. A polyester yarn comprising polyester obtained by polymerization in the presence of an inorganic tin compound catalyst.

2. The polyester yarn of claim 1, **characterized in that** the inorganic tin compound is an inorganic tin first compound or an inorganic tin second compound (stannic compound).

3. The polyester yarn of claim 2, **characterized in that** the inorganic tin first compound is selected from the group consisting of stannous oxide, stannous pyrophosphoric acid, stannous phosphoric acid, stannous tartaric acid, stannous acetic acid, stannous oxalic acid, stannous stearic acid, stannous oleic acid, stannous gluconic acid, stannous citric acid, stannous 2-ethylhexanonic acid, stannous ethoxide, stannous acetylacetonate, and stannous glycolic acid.

4. The polyester yarn of claim 2, **characterized in that** the inorganic tin second compound is selected from the group consisting of stannic oxide, stannic pyrophosphoric acid, stannic phosphoric acid, stannic tartaric acid, stannic acetic acid, stannic oxalic acid, stannic stearic acid, stannic oleic acid, stannic gluconic acid, stannic citric acid, stannic 2-ethylhexanonic acid, stannic ethoxide, stannic acetylacetonate, and stannic glycolic acid.

5. The polyester yarn of claim 1, **characterized in that** the polyester yarn comprises polyethylene terephthalate and polybutylene terephthalate, and comprises 10 ppm to 200 ppm of a residue of the inorganic tin compound.

6. The polyester yarn of claim 1, wherein the polyester polymer is one or two or more selected from polyethylene terephthalate, polytrimethylene terephthalate, polytetramethylene terephthalate, and polybutylene terephthalate.

7. The polyester yarn of claim 1, wherein the polyester yarn is a core-sheath type composite fiber, and the polyester is disposed in a sheath portion of the core-sheath type composite fiber.

8. The polyester yarn of claim 1, **characterized in that** the polyester yarn is non-circular cross-section yarn.

9. The polyester yarn of claim 1, **characterized in that** the polyester yarn is false-twist crimped yarn.

10. A method for manufacturing polyester yarn, the method **characterized by** polymerizing a polymerization starting material composed of an esterification product of a dicarboxylic acid component and a glycol component in the presence of an inorganic tin compound catalyst to obtain a polyester polymer, and then melt-spinning the polyester polymer to manufacture polyester yarn.

11. The method of claim 10, **characterized in that** the inorganic tin compound catalyst is introduced when preparing a slurry before an esterification reaction, introduced during the esterification reaction, or introduced in a polycondensation step after the esterification reaction.

**12.** The method of claim 10, **characterized in that** the method is **characterized in that** a polyester polymerization catalyst containing an inorganic tin compound is added in a powder state or introduced in a catalyst solution state in a polyester process.

**13.** The method of claim 10, **characterized in that** the method comprises a step of preparing a polyester polymerization catalyst containing an inorganic tin compound in an ethylene glycol solution and then introducing the prepared polyester polymerization catalyst, wherein the step is a step of reacting the ethylene glycol solution with the inorganic tin compound to prepare and introduce the polyester polymerization catalyst in the form of tin glycolic acid.

**14.** The method of claim 10, **characterized in that** 10 ppm to 200 ppm of the inorganic tin compound catalyst is added based on the content of the tin element contained in the inorganic tin compound catalyst with respect to the weight of finally produced polyester.

# EP 4 202 092 A1

## INTERNATIONAL SEARCH REPORT

| International application No. |
|---|
| **PCT/KR2021/010933** |

### A. CLASSIFICATION OF SUBJECT MATTER

**D01F 1/10**(2006.01)i; **D01D 5/08**(2006.01)i; **D01F 8/14**(2006.01)i; **D01D 5/34**(2006.01)i; **D01D 5/253**(2006.01)i; **D01D 5/22**(2006.01)i; **D02G 3/04**(2006.01)i

According to International Patent Classification (IPC) or to both national classification and IPC

### B. FIELDS SEARCHED

Minimum documentation searched (classification system followed by classification symbols)

D01F 1/10(2006.01); C08G 18/24(2006.01); C08G 63/137(2006.01); C08G 63/85(2006.01); G03G 9/087(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스터 (polyester), 주석 (tin), 폴리에틸렌 테레프탈레이트 (polyethylene terephthalate), 섬유 (fiber)

### C. DOCUMENTS CONSIDERED TO BE RELEVANT

| Category* | Citation of document, with indication, where appropriate, of the relevant passages | Relevant to claim No. |
|---|---|---|
| X | JP 59-045763 B2 (TEIJIN LTD.) 08 November 1984 (1984-11-08)<br>See column 9, lines 16-20. | 1-3,5-12,14 |
| Y | | 4,13 |
| Y | JP 2003-231744 A (KAO CORP.) 19 August 2003 (2003-08-19)<br>See claim 1; and paragraph [0011]. | 4 |
| Y | US 3706774 A (GITLITZ, M. H.) 19 December 1972 (1972-12-19)<br>See claim 4. | 13 |
| A | JP 2018-090673 A (KAO CORP.) 14 June 2018 (2018-06-14)<br>See entire document. | 1-14 |
| A | KR 10-0193303 B1 (ATOCHEM NORTH AMERICA INC.) 15 June 1999 (1999-06-15)<br>See entire document. | 1-14 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 December 2021** | **06 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 202 092 A1

**INTERNATIONAL SEARCH REPORT**
**Information on patent family members**

International application No.

**PCT/KR2021/010933**

| Patent document cited in search report | | | Publication date (day/month/year) | Patent family member(s) | | | Publication date (day/month/year) |
|---|---|---|---|---|---|---|---|
| JP | 59-045763 | B2 | 08 November 1984 | JP | 52-098087 | A | 17 August 1977 |
| | | | | JP | 52-098088 | A | 17 August 1977 |
| | | | | JP | 52-107318 | A | 08 September 1977 |
| | | | | JP | 53-030689 | A | 23 March 1978 |
| | | | | JP | 59-030727 | B2 | 28 July 1984 |
| | | | | JP | 59-030728 | B2 | 28 July 1984 |
| JP | 2003-231744 | A | 19 August 2003 | JP | 3597835 | B2 | 08 December 2004 |
| | | | | US | 2003-0109668 | A1 | 12 June 2003 |
| | | | | US | 6936393 | B2 | 30 August 2005 |
| US | 3706774 | A | 19 December 1972 | | None | | |
| JP | 2018-090673 | A | 14 June 2018 | JP | 6827784 | B2 | 10 February 2021 |
| KR | 10-0193303 | B1 | 15 June 1999 | EP | 0419254 | A2 | 27 March 1991 |
| | | | | EP | 0419254 | B1 | 24 June 1998 |
| | | | | JP | 03-119053 | A | 21 May 1991 |
| | | | | JP | 07-064923 | B2 | 12 July 1995 |
| | | | | US | 4970288 | A | 13 November 1990 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100184916 A

- US 6365659 B

**Non-patent literature cited in the description**

- *Anal. Bioanal. Chem.,* 2006, vol. 385, 821